# EUROPÄISCHE PATENTSCHRIFT

(11) **EP 1 560 235 B1**
(45) Veröffentlichungstag und Bekanntmachung des Hinweises auf die Patenterteilung: **06.06.2012**
(21) Anmeldenummer: 05001704.5
(22) Anmeldetag: 27.01.2005
(51) Int. Cl.: H01G 4/012, H01G 4/005, H01G 4/30

(54) **Elektrisches Vielschichtbauelement**
Electrical multilayer component
Composant multicouche électrique

(30) Priorität: 27.01.2004 DE 102004004096
(43) Veröffentlichungstag der Anmeldung: 03.08.2005
(73) Patentinhaber: EPCOS AG, 81669 München (DE)
(72) Erfinder: Feichtinger, Thomas, 8010 Graz (AT); Ortner, Markus, 8010 Graz (AT)
(74) Vertreter: Epping - Hermann - Fischer

(56) Entgegenhaltungen:
- DE-A1- 10 064 447
- JP-A- 6 053 078
- JP-A- 6 151 245
- JP-A- 7 161 568
- JP-A- 10 012 490
- JP-A- 11 097 291
- JP-A- 2000 228 329
- JP-A- 2003 068 568
- US-A- 5 590 016

## Beschreibung

Die Erfindung betrifft ein elektrisches Vielschichtbauelement mit Elektrodenschichten und Dielektrikumschichten.

Aus der Druckschrift DE 100 64 447 C2 ist ein elektrisches Vielschichtbauelement bekannt, das einen Grundkörper aufweist und mit einander verstapelte Elektrodenschichten einer ersten und einer zweiten Sorte die durch Dielektrikumschichten voneinander getrennt sind und welche mindestens eine Kapazität bilden. Die Elektrodenschichten sind dabei an den Seitenflächen des Grundkörpers nach außen hin kontaktiert.

Die Druckschrift JP 2000 228329 A offenbart eine Kondensatoranordnung, welche eine Vielzahl an Vielschichtkondensatoren aufweist, wobei die Vielschichtkondensatoren jeweils aus gegenüberliegenden Innenelektroden und dazwischenliegenden Dielektrikumschichten gebildet sind. Zwischen benachbarten Vielschichtkondensatoren sind jeweils Abschirmelektroden zur Unterdrückung von Streukapazitäten angeordnet.

Die Merkmale des Oberbegriffs von Anspruch 1 sind aus der Druckschrift DE 100 64 447 A1 bekannt.

Es ist Aufgabe der vorliegenden Erfindung, ein elektrisches Vielschichtbauelement anzugeben, das verbesserte elektrische Eigenschaften aufweist.

Diese Aufgabe wird durch ein Velschichtbauelement gemäß Anspruch 1 gelöst.

Die vorliegende Erfindung macht sich das Grundprinzip zunutze, wonach bei einem elektrokeramischen Vielschichtbauelement mehrere Kondensatoren in einen einzigen Grundkörper integriert sein können.

Die einzelnen Kapazitäten werden dabei gebildet durch einander gegenüberliegende Elektrodenschichten, zwischen denen eine Dielektrikumschicht angeordnet ist.

Zwischen benachbarten Kondensatoren können Streukapazitäten auftreten, die unerwünscht sind. Die Streukapazitäten resultieren zum einen aus der örtlichen Nähe der die Kondensatoren bildenden Elektrodenschichten.

Durch einen vergrößerten Abstand der beiden Elektrodenschichten ergibt sich eine verbesserte Entkopplung, wodurch Streukapazitäten vermindert werden können.

Elektrische Vielschichtbauelement werden gemäß der vorliegenden Erfindung hergestellt durch Bereitstellen einer Vielzahl Dielektrikumschichten, beispielsweise von Grünfolien, anschließendem Bedrucken dieser Grünfolien mit einer metallhaltigen Paste, wobei der bedruckte Bereich später die Elektrodenschicht bildet. Wird nun eine Grünfolie mit mehreren Elektrodenschichten beschichtet, so liegen bei rechteckiger Bauform des Vielschichtbauelements die Elektrodenschichten in einer Ebene. Es ist jedoch auch denkbar, die Dielektrikumschichten nicht eben übereinander zu stapeln und anschließend zu sintern, sondern den Elektrodenschichten die Dielektrikumschichten eine beliebige andere äußere Form zu geben. Die Dielektrikumschichten sind, solange sie noch als Grünfolie vorliegen, sehr flexibel und daher an verschiedene Formen anpaßbar.

Es wird dementsprechend ein elektrische Vielschichtbauelement angegeben, das mindestens zwei Kondensatoren enthält, welche jeweils gebildet sind aus gegenüberliegenden Elektrodenschichten und wenigstens einer dazwischen liegenden Dielektrikumschicht. Wenigstens zwei zu verschiedenen Kondensatoren gehörende Elektrodenschichten sind dabei seitlich zueinander versetzt.

Es ist darüber hinaus ein Bauelement vorteilhaft, bei dem zwischen zwei seitlich zueinander versetzten Elektrodenschichten wenigstens eine Abschirmschicht angeordnet ist.

Durch diese besondere Anordnung der Elektrodenschichten kann erreicht werden, daß zwei Elektrodenschichten, die zu verschiedenen Kondensatoren gehören eine verringerte Streukapazität aufweisen.

Es ist darüber hinaus vorteilhaft, wenn jede der beiden zueinander versetzten Elektrodenschichten wenigstens teilweise oder auch ganz von einer Abschirmschicht überlappt wird.

Die seitliche Versetzung zweier Elektrodenschichten zueinander bedeutet in diesem Zusammenhang, daß die Versetzung einer Elektrodenschicht relativ zur anderen Elektrodenschicht in der Ebene einer der beiden Elektrodenschichten erfolgt. Üblicherweise liegen Elektrodenschichten, die einen Kondenstor bilden, stapelförmig übereinander. Seitlich zueinander versetzte Elektrodenschichten erhält man beispielsweise in dem man zwei solcher Schichtstapel nebeneinander und in verschiedenen Höhen in dem Vielschichtbauelement anordnet.

Indem zwischen den Elektrodenschichten eine Abschirmschicht angeordnet ist, kann die kapazitive Entkopplung der beiden Elektrodenschichten noch weiter verbessert werden. Eine Abschirmschicht kann insbesondere ihrerseits eine Elektrodenschicht sein, das heißt, daß sie Teil eines im Vielschichtbauelement enthaltenen Kondensators ist. Darüber hinaus hat natürlich die Abschirmschicht ebenso wie die Elektrodenschicht ausreichend gute elektrische leitfähige Eigenschaften, so daß sie zur Abschirmung elektrostatischer Felder geeignet ist. Die Abschirmschicht kann vorzugsweise in einer Ebene liegen, die parallel zu den zueinander versetzten Elektrodenschichten ist.

Darüber hinaus kann dadurch, daß jede der beiden Elektrodenschichten von einer Abschirmschicht überlappt wird, die Entkopplung zwischen den beiden Schichten noch weiter verbessert werden. Die beiden Elektrodenschichten können dabei von ein und derselben Abschirmschicht überlappt werden.

Mit anderen Worten, es wird dafür Sorge getragen, daß zwei Elektrodenschichten, die in verschiedenen Höhen des Bauelements angeordnet sind, dazwischenliegend noch wenigstens eine Abschirmschicht aufweisen, die die beiden Elektrodenschichten voneinander entkoppelt. Der Überlapp der Abschirmschicht mit einer Elektrodenschicht entkoppelt jede einzelne Elektrodenschicht noch mal für sich in die Richtung, in der die andere Elektrodenschicht liegt. Überlapp bedeutet in diesem Zusammenhang, daß zwei Schichten bei einer Projektion senkrecht zu den Schichtebenen von der einen Schicht auf die andere wenigstens teilweise zur Deckung gelangen.

Darüber hinaus ist es besonders vorteilhaft, wenn bei einem Bauelement zueinander versetzte Elektrodenschichten einander überlappen.

Das Überlappen der beiden Elektrodenschichten, die zu verschiedenen Kondensatoren gehören, hat den Vorteil, daß das Bauelement bei gleicher Kapazität weniger Platz beansprucht.

In einer anderen Ausführungsform des Bauelementes kann es vorgesehen sein, daß zwischen zwei Elektrodenschichten zwei Abschirmschichten vorgesehen sind, die untereinander einen Überlapp aufweisen.

Darüber hinaus ist es vorteilhaft, wenn zwischen zwei Abschirmschichten mindestens eine Dielektrikumschicht liegt.

Diese Ausführungsform hat den Vorteil, daß durch die Abschirmschichten eine separate Kapazität gebildet werden kann, die einerseits eine definierte Kopplung zwischen den Abschirmschichten ermöglicht und andererseits eine zusätzliche, im Bauelement vorhandenen Kondensator bilden, der von außen beschaltet werden kann und entsprechend genutzt werden kann.

In einer anderen Ausführungsform ist es vorgesehen, daß nur eine Abschirmschicht zwischen zwei Elektrodenschichten vorgesehen ist, wobei diese eine Abschirmschicht beide Elektrodenschichten überlappt.

In einer anderen Ausführungsform des Bauelementes kann es vorgesehen sein, daß jede Abschirmschicht Teil eines oder mehrerer Kondensatoren ist. Dadurch wird der Vorteil erzielt, daß die Abschirmschichten neben der Entkopplung von benachbarten Elektrodenschichten noch eine andere Funktion übernehmen können. Indem sie Teil eines Kondensators sind, können sie zur Kapazität eines weiteren Kondensators, der im Bauelement integriert ist, beitragen.

Dadurch kann die Kapazität der im Bauelement vorhandenen Kondensatoren vorteilhaft erhöht werden.

In einer anderen Ausführungsform des Vielschichtbauelements ist eine erste Sorte von Elektrodenschichten vorgesehen, die im wesentlichen nur zu einem ersten Kondensator beitragen. Darüber hinaus ist eine zweite Sorte von Elektrodenschichten vorgesehen, die ihrerseits im wesentlichen nur zu einem zweiten Kondensator beitragen. Die Elektrodenschichten einer jeden Sorte liegen in Form von jeweils übereinander gestapelten Schichten vor. Die so gebildeten Stapel sind seitlich zueinander versetzt. Hierbei ist der Begriff der seitlichen Versetzung von Stapeln zueinander ebenso zu interpretieren, wie es bereits weiter oben beschrieben worden ist.

Zwischen jeder Elektrodenschicht der ersten Sorte und jeder Elektrodenschicht der zweiten Sorte ist wenigstens eine Abschirmschicht angeordnet. Es kann sich dabei jeweils um ein und dieselbe Abschirmschicht handeln.

Die Abschirmschicht verläuft vorzugsweise parallel zu den Elektrodenschichten.

Diese Ausführungsform des Bauelements erweitert das Konzept der Entkopplung einzelner Elektrodenschichten auf sämtliche Elektrodenschichten, die einer Kapazität angehören. Dadurch kann die Entkopplung zwischen zwei im Bauelement vorliegenden Kondensatoren noch weiter verbessert werden.

In einer anderen Ausführungsform des Bauelements kann es vorgesehen sein, daß jede Abschirmschicht zu jedem der beiden Kondensatoren beiträgt. Dadurch kann die Kapazität der beiden im Bauelement enthaltenen Kondensatoren auf einfache Art und Weise und vor allem auch platzsparend erhöht werden. Denn die Kapazitätserhöhung geschieht in diesem Fall ohne das Aufbringen zusätzlicher Elektrodenschichten, sondern lediglich durch Nutzung der ohnehin zur Entkopplung der Kondensatoren notwendigen Abschirmschichten.

In einer anderen Ausführungsform des Vielschichtbauelements ist die jeweils unterste Elektrodenschicht sowie die jeweils oberste Elektrodenschicht des Bauelements an ihrer Ober- und ihrer Unterseite mit einer Abschirmschicht versehen. Diese Ausführungsform hat den Vorteil, daß die Elektrodenschichten auch nach außen hin gut abgeschirmt werden.

Darüber hinaus kann diese Ausgestaltung auch von Vorteil sein, wenn nämlich die übrigen Bestandteile des Vielschichtbauelements symmetrisch angeordnet sind, das heißt, daß die Elektrodenschichten so angeordnet sind, daß das Bauelement sowohl mit der Unterseite als auch mit der Oberseite auf eine Leiterplatte montiert werden kann, ohne daß sich ein Unterschied ergibt. In diesem Fall kann das Vorsehen von Abschirmschichten auch am oberen Rand und am unteren Ende der gestapelten Elektrodenschichten einen zusätzlichen Beitrag zur Verdrehsicherheit des Bauelementes bewirken.

In einer anderen Ausführungsform des Bauelements weisen zwei Kondensatoren dieselbe Kapazität auf. In diesem Fall ist das Bauelement sehr homogen gestaltet, das heißt, daß es auch leicht verdrehsicher ausgebildet werden kann, so daß Oberund Unterseite gleichberechtigt auf eine Leiterplatte montiert werden können.

Die Frage der Verdrehsicherheit spielt dabei eine besondere Rolle für den Fall, daß die Bauelemente als SMT-fähige Bauelemente ausgebildet sind. SMT steht dabei für Surface Mount Technologie.

In einer anderen Ausführungsform haben die im Bauelement vorgesehenen Kondensatoren verschiedene Kapazitäten.

Hinsichtlich der Dielektrikumschichten ist es besonders vorteilhaft, wenn diese eine sogenannte Kondensatorkeramik enthalten. Diese Kondensatorkeramiken haben besonders vorteilhafte Eigenschaften, beispielsweise hinsichtlich der Temperaturabhängigkeit der Dielektrizitätskonstante.

Als Kondensatorkeramik kann beispielsweise eine Keramik auf der Basis Bariumtitanat in Betracht kommen. Es kommt insbesondere in Betracht, sogenannte "C0G"-Keramiken zu verwenden. Ein solches Material wäre beispielsweise (Sm, Ba) NdCiO₃-Keramik.

Darüber hinaus kommt aber auch eine sogenannte "X7R"-Keramik in Betracht, die beispielsweise dotiertes Bariumtitanat enthalten kann.

Es kommen darüber hinaus auch weitere Keramikmaterialien in Betracht, beispielsweise Z5O oder Y5V-Keramiken, die gebildet sein können aus einem Barium-Zirkon-Titanat. Darüber hinaus kommen auch HQM-Materialien in Betracht, welche gebildet werden aus Grundmassen, die denen von C0G-Massen gleichen.

Die genannten Kondensatormaterialien sind insbesondere geeignet für Filter gegenüber elektromagnetischen Störungen (englisch: EMI = "Electro Magnetic Interference"-Filter oder auch rfi = "Radio Frequency Interference"-Filter).

Hinsichtlich des Materials einer oder mehrerer Dielektrikumschichten ist es darüber hinaus vorteilhaft, wenn ein Material mit spannungsabhängigem Widerstand, also eine sogenannte Varistorkeramik enthalten ist. Als Varistorkeramiken kommen insbesondere Systeme in Betracht, die ZnO-Bi oder ZnO-Pr enthalten. Solche Dielektrikumschichten haben den Vorteil, daß sie neben dem Kondensator noch als weiteres Bauelement einen Varistor in das Vielschichtbauelement integrieren.

Keramikmaterialien mit Varistoreffekt sind dementsprechend vor allem dazu geeignet, ESD (ESD englisch: ESD = "Electro Static Discharge")-Schutzbauelemente herzustellen.

In einer anderen Ausführungsform des Bauelements ist es vorteilhaft, wenn als Material für die Elektrodenschichten sowie gegebenenfalls auch für Abschirmschichten beispielsweise Silber, Palladium, Platin, sowie auch eine Silber-Palladium-Legierung, eine Silber-Platin-Legierung oder auch Kupfer oder Nickel verwendet werden. Diese Materialien haben den Vorteil, daß sie gute Sintereigenschaften bei der Gemeinsamsinterung mit vielen verschiedenen Keramiken haben.

Im folgenden wird die Erfindung anhand von Ausführungsbeispiele und den dazugehörigen Figuren näher erläutert.
- Figur 1: zeigt ein Vielschichtbauelement in einer perspektivischen Ansicht mit Außenanschlüssen.
- Figur 2: zeigt einen Schnitt entlang der Linie II-II aus Figur 1, also einen Längsschnitt durch das Bauelement aus Figur 1.
- Figur 3: zeigt einen Schnitt entlang der Linie III-III in Figur 2, also einen Querschnitt durch das Bauelement aus Figur 1.
- Figur 4: zeigt einen Schnitt entlang der Linie IV-IV in Figur 2, also einen Querschnitt durch das Bauelement aus Figur 1.
- Figur 5: zeigt ein Ersatzschaltbild für das Bauelement aus Figur 1.
- Figuren 6A, 7A, 8A, 9A, 10A, 11A: zeigen beispielhafte weitere Vielschichtbauelemente in perspektivischen Ansichten.
- Die Figuren 6B, 7B, 8B, 9B, 10B, 11B: zeigen Längsschnitte durch die entsprechenden Vielschichtbauelemente, wobei die Schnittansichten denen aus Figur 2 in Bezug auf Figur 1 entsprechen, also wieder Schnittansichten durch die Linie II-II sind.
- Die Figuren 6C, 7C, 8C, 9C: zeigen die zu den entsprechenden Figuren 6, 7, 8, 9 gehörenden Ersatzschaltbilder.
- Figur 8D: zeigt ein weiteres Ersatzschaltbild zusätzlich zur Figur 8C, das man erhält, wenn man in Figur 8A die Dielektrikumschichten 8 so ausführt, daß sie eine Varistorkeramik enthalten.

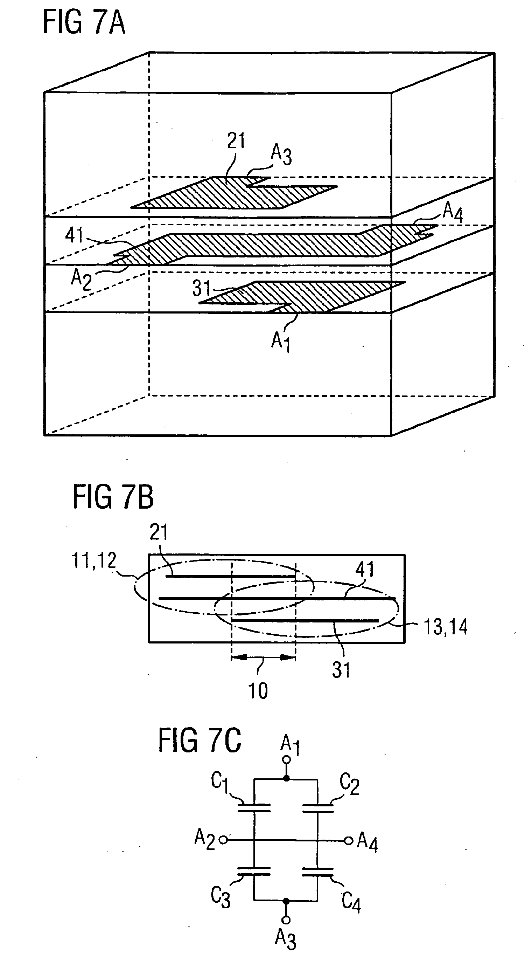

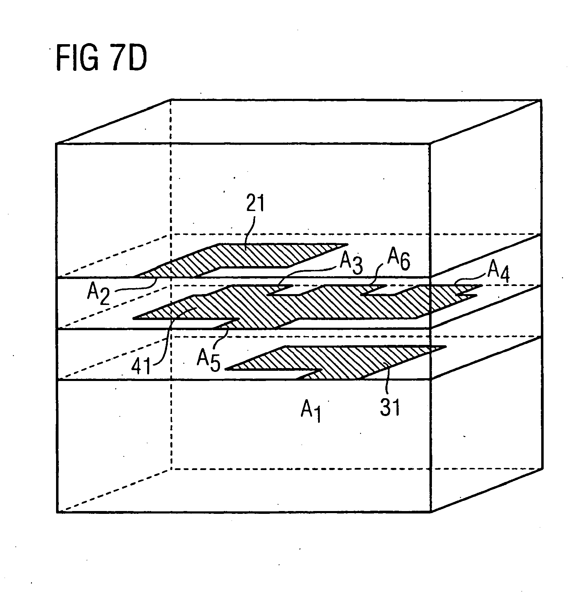

- Figur 7D: zeigt eine Erweiterung des Bauelements aus Figur 7A.

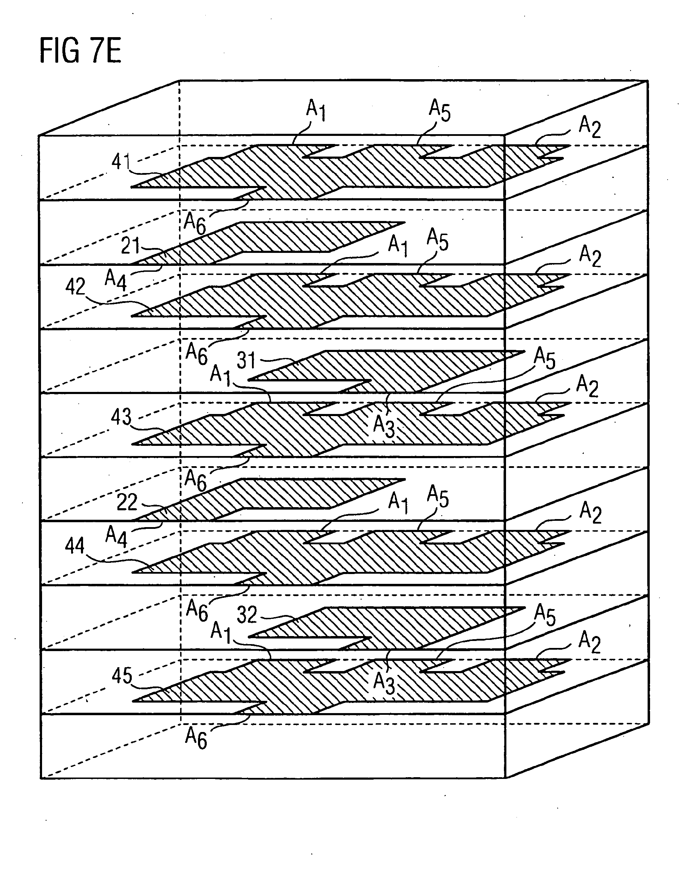

- Figur 7E: zeigt eine Erweiterung des Bauelements aus Figur 7D.

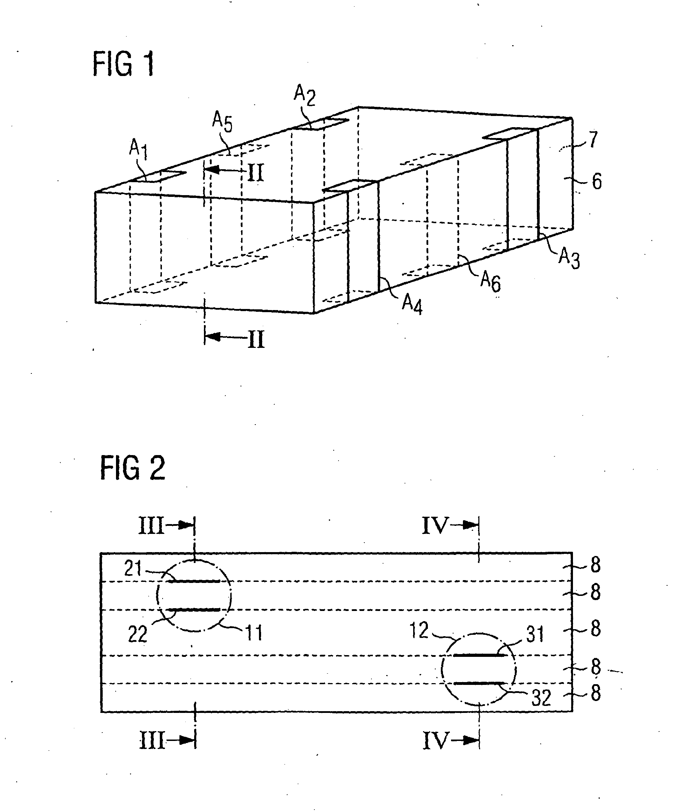

Figur 1 zeigt den Grundkörper 6 eines Vielschichtbauelements in einer perspektivischen Ansicht.

Das Bauelement weist eine Längsachse 7 auf, entlang derer sich das Bauelement erstreckt. Der Grundkörper 6 ist quaderförmig, kann aber auch jede beliebige andere geometrische Form aufweisen. Die Quaderform hat den Vorteil, daß das Bauelement relativ leicht herstellbar ist und auch ohne größeren Zusatzaufwand für die SMT (Surface Mount Technologie) verwendet werden kann. Auf den Seitenflächen des Grundkörpers 6 sind Außenanschlüsse A₁, A₂, A₃, A₄ angeordnet.

Die Außenanschlüsse sind jeweils gegenüberliegend aufgebracht. Das heißt, dem Außenanschluß A₁ liegt der Außenanschluß A₄ und dem Außenanschluß A₂ liegt der Außenanschluß A₃ gegenüber. Die Außenanschlüsse können beispielsweise durch Einbrennen einer Silbereinbrennpaste oder eines anderen geeigneten Materials hergestellt werden. Sie sind nicht nur auf den Seitenflächen angeordnet, sondern sie umgreifen den Grundkörper 6 auch an seinen Begrenzungskanten und bedecken folglich kleine Teile der Oberseite beziehungsweise der Grundfläche des Grundkörpers 6. Durch diese Maßnahme kann sichergestellt werden, daß das Bauelement oberflächenmontagefähig ist. Es kann dann einfach auf der Oberseite oder auf der Unterseite ein Lotpunkt gesetzt werden und mit Hilfe des Lotpunkts das Bauelement auf einer Leiterplatte verlötet werden.

Figur 2 zeigte einen Längsschnitt durch das Bauelement aus Figur 1. Es ist zu erkennen, daß der Grundkörper 6 gebildet ist aus übereinanderliegenden Dielektrikumschichten 8. Diese Dielektrikumschichten 8 können beispielsweise keramische Grünfolien sein, die im verformfähigen Zustand übereinandergestapelt, verpreßt, geschnitten und anschließend versintert werden, so daß ein monolithischer Grundkörper 6 entsteht. Auf einzelne Dielektrikumschichten 8 sind Elektrodenschichten 21, 22, 31, 32 aufgebracht. Diese Elektrodenschichten werden bei der Herstellung des Grundkörpers des Bauelementes durch Aufdrucken einer Siebdruckpaste oder auch mit einem anderen geeigneten Verfahren auf die noch freie Oberfläche der betreffenden Dielektrikumschicht aufgebracht. Anschließend werden die bedruckten Dielektrikumschichten verstapelt, und wie weiter oben bereites beschrieben, weiterverarbeitet.

Dieser grundsätzliche Aufbau des Vielschichtbauelementes ist für alle hier beschriebenen Beispiele der gleiche, allerdings ist dieser Aufbau nicht zwingend und soll keinesfalls als Begrenzung des Schutzbereichs verstanden werden.

Die in dem Grundkörper angeordnete Elektrodenschichten 21, 22 beziehungsweise 31, 32 bilden jeweils eine Kondensator 11 beziehungsweise 12. Die beiden Kondensatoren sind gemeinsam in das Vielschichtbauelement integriert. Dadurch ergibt sich der Vorteil, daß für die Realisierung von zwei Kondensatoren auf einer Leiterplatte weniger Bauelementfläche verbraucht wird, als wenn die Kondensatoren in einzelnen Vielschichtbauelementen vorliegen.

Darüber hinaus ist zu erkennen, daß die Elektrodenschichten 21, 22 die zum Kondensator 11 gehören und die Elektrodenschichten 31, 32 die zum Kondensator 12 gehören seitlich zueinander versetzt sind. Dieser seitliche Versatz ist in Richtung der Längsachse 7 des Bauelementes vorgenommen worden und entspricht der Anordnung der seitlich am Grundkörper 6 angeordneten Außenanschlüsse A₁, A₂, A₃, A₄. Dies bedeutet, daß die Elektrodenschichten 21, 22 mit den Außenanschlüssen A₁ und A₄ kontaktiert sind. Dementsprechend sind die Elektrodenschichten 31, 32 mit den Außenanschlüssen A₂ und A₃ kontaktiert. Durch den seitlichen Versatz der Elektrodenschichten 21, 22 beziehungsweise 31, 32 und mithin der dadurch gebildeten Kondensatoren 11 und 12 kann eine weitere elektrostatische Entkopplung der beiden Kondensatoren 11, 12 erzielt werden, was die Streukapazität noch weiter in vorteilhafterweise reduziert.

Mit Hilfe des seitlichen Versatzes der Elektrodenschichten zueinander kann bei weiter fortgeschrittenen Ausführungsformen des hier beschriebenen Vielschichtbauelementes noch erreicht werden, daß eine Vielzahl von Anschlußmöglichkeiten durch Vorsehen von vier Außenanschlüssen A₁ bis A₄ erreicht werden kann.

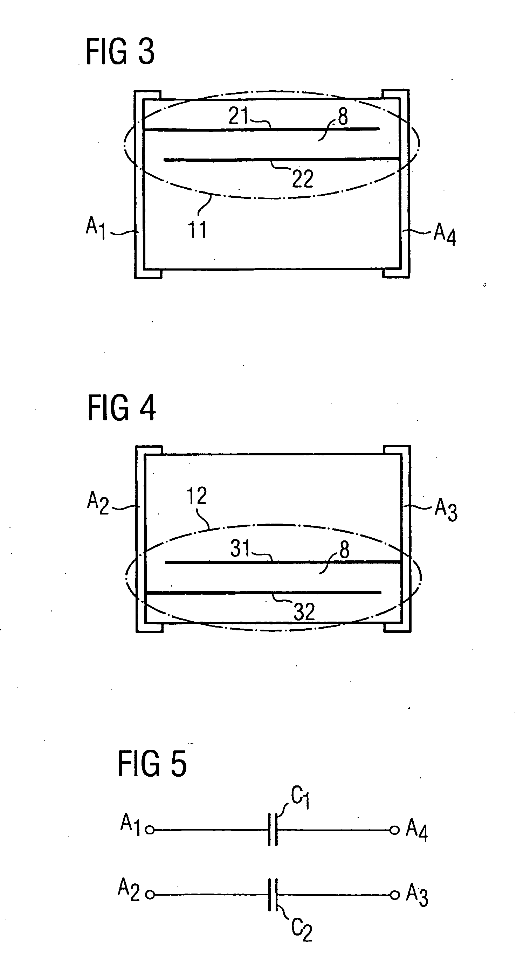

Figur 3 zeigt einen Schnitt durch das Bauelement aus Figur 2 entlang der Linie III-III. Hier ist zu erkennen, daß die Elektrodenschicht 21 mit dem Außenanschluß A₁ verbunden ist. Entsprechend ist die Elektrodenschicht 22 mit dem Außenanschluß A₄ verbunden. Die Elektrodenschicht 21 und die Elektrodenschicht 22 überlappen einander und bilden somit einen Kondensator 11. Zwischen den Elektrodenschichten 21, 22 ist eine Dielektrikumschicht 8 angeordnet. Obwohl die Dielektrikumschichten 8 in Figur 2 alle mit ein und demselben Bezugszeichen bezeichnet sind, bedeutet dies nicht, daß diese Dielektrikumschichten alle aus demselben Material bestehen müssen. Es ist vielmehr auch möglich, für die Dielektrikumschichten 8 unterschiedliche Materialien zu verwenden.

Figur 4 zeigt einen Schnitt entlang der Linie IV-IV aus Figur 2, also durch den Kondensator 12. Entsprechend Figur 3 ist wieder zu erkennen, daß die Elektrodenschicht 32 mit dem Außenanschluß A₂ und die Elektrodenschicht 31 mit dem Außenanschluß A₃ verbunden ist.

Figur 5 zeigt das Ersatzschaltbild für das Bauelement aus Figur 2. Es ist hier zu entnehmen, daß bei dem Außenanschluß A₁ und A₄ ein Kondensator mit der Kapazität C₁ und zwischen dem Außenanschluß A₂ und A₃ ein weiterer Kondensator mit der Kapazität C₂ geschalten wird.

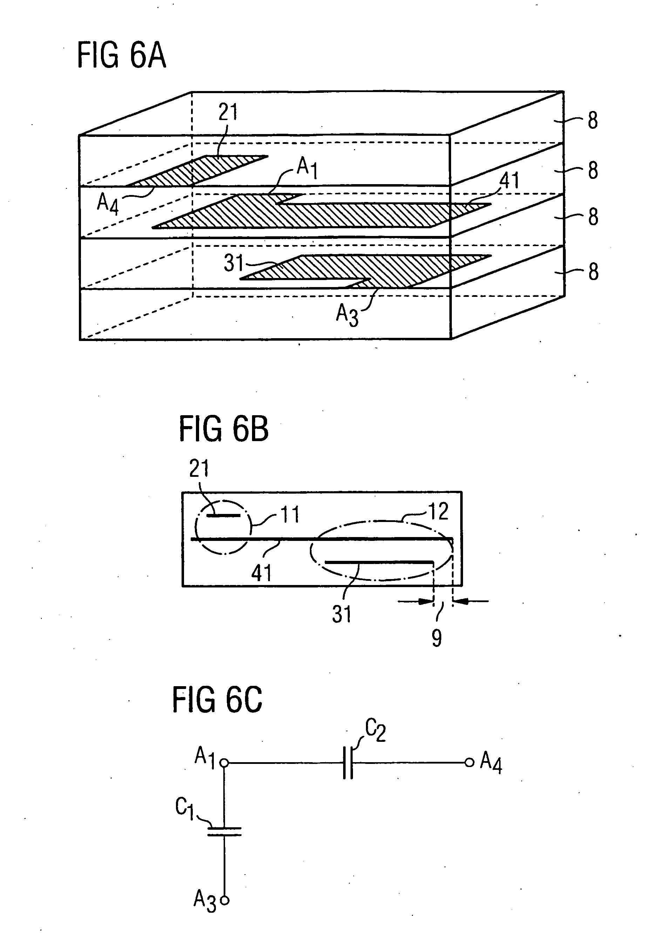

Figur 6A zeigt ein Ausführungsbeispiel für ein Bauelement mit einer Abschirmschicht 41. Im übrigen sind eine Elektrodenschicht 21 und eine Elektrodenschicht 31 in dem Bauelement vorgesehen. Durch entsprechende Markierung mit A₁, A₃ und A₄ ist angezeigt, mit welchem Außenanschluß die betreffende Elektrodenschicht jeweils kontaktiert ist. Zur besseren Übersichtlichkeit sind die Außenanschlüsse selbst in der perspektivischen Darstellung nicht dargestellt. Darüber hinaus enthält Figur 6A noch die Dielektrikumschichten 8, die zwar alle mit dem selben Bezugszeichen bezeichnet sind, die jedoch durchaus auch aus verschiedenen Materialien bestehen können. Das kann zum Beispiel bedeuten, daß die oberste Dielektrikumschicht 8 aus einem anderen Material besteht als die darauffolgende Dielektrikumschicht 8.

Figur 6B ist in einem Längsschnitt zu Figur 6A zu entnehmen, daß die Elektrodenschicht 21 mit der Abschirmschicht 41, welche ihrerseits auch eine Elektrodenschicht darstellt, einen ersten Kondensator 11 bildet. Darüber hinaus bildet die Elektrodenschicht 31 mit der Abschirmschicht 41 einen weiteren Kondensator 12. Die Abschirmschicht 41 ist also Bestandteil jeweils eines Kondensators 11, 12 und dient darüber hinaus auch der Abschirmung zwischen den Elektrodenschichten 21, 31, da jetzt in geometrischer Hinsicht keine geradlinige Verbindung mehr zwischen den Elektrodenschichten 21, 31 möglich ist, ohne die Abschirmschicht 41 zu durchkreuzen. Dies bedeutet, daß elektrische Felder, die zwischen der Elektrodenschicht 21 und der Elektrodenschicht 31 eine mögliche Kopplung erzeugen würden, wirksam durch die elektrisch leitende Abschirmschicht 41 abgeschirmt werden. Dadurch wird die Streukapazität zwischen den Kondensatoren 11 und 12 wirksam vermindert.

Es soll ergänzend noch darauf hingewiesen werden, daß es besonders in einer vorteilhaften Ausführungsform des Bauelements vorgesehen ist, daß die Abschirmschicht 41 die beiden Elektrodenschichten 21, 31 seitlich überragt, weswegen ein Überstand 9 seitlich vorgesehen ist. Dadurch kann die Abschirmung besonders wirksam vorgenommen werden.

Figur 6A ist noch zu entnehmen, daß die Abschirmschicht 41 hinsichtlich ihrer Form einerseits an die Elektrodenschicht 21 und andererseits an die Form der Elektrodenschicht 31 weitgehend angepaßt ist, so daß eine maximale Überlappfläche zur Bildung des jeweiligen Kondensators 11, 12 vorhanden ist. Darüber hinaus, wie schon zu Figur 6B ausgeführt, exsistiert vorteilhafterweise ein Überlapp, so daß die Abschirmschicht 41 die Elektrodenschichten 21, 31 seitlich überragt. Dies ist allerdings der Figur 6A nicht zu entnehmen.

Figur 6C zeigt ein Ersatzschaltbild des Bauelements auf Figur 6A. Die Kondensatoren 11 und 12 haben demnach Kapazitäten C₁ und C₂ und sind dergestalt miteinander verschaltet, daß der Anschluß A₁ mit beiden Kondensatoren verbunden ist und die Anschlüsse A₄ und A₃ nur jeweils mit einem der beiden Kondensatoren verbunden sind. Ausgehend vom Außenanschluß A₁ ergibt sich somit eine Sternschaltung.

Figur 7A zeigt eine weitere Ausführungsform des Bauelements. Ein erster Unterschied zu Figur 6A besteht darin, daß die Abschirmschicht 41 nicht nur mit einem Außenanschluß sondern mit zwei Außenanschlüssen, nämlich A₂ und A₄ verbunden ist. Darüber hinaus besteht ein weiterer Unterschied zu Figur 6A darin, daß die Elektrodenschichten 21 und 31 nicht nur mit der gegenüberliegenden Abschirmschicht 41 sondern auch untereinander einen Überlapp aufweisen.

Dieser Überlapp ist besonders gut erkennbar in Figur 7B, wo er mit dem Bezugszeichen 10 bezeichnet ist. Hinsichtlich der nicht in den Figuren 6A, 7A, 8A, 9A, 10A, 11A dargestellten Außenanschlüsse A₁ bis A₄ gilt das zu Figur 6A gesagte.

Figur 7B ist zu entnehmen, daß die Elektrodenschicht 21 mit der Abschirmschicht 41 zwei Kondensatoren 11, 12 bildet. Dies ergibt sich insbesondere in Zusammenschau mit Figur 7A. Hier ist entnehmbar, daß ausgehend vom Außenanschluß A₄ ein erster Kondensator gebildet wird über die Elektrodenschicht 21, die Abschirmschicht 41 bis hin zum Außenanschluß A₂ und daß ein zweiter Kondensator 12 gebildet wird, ausgehend vom Außenanschluß A₃ über die Elektrodenschicht 21, die Abschirmschicht 41 bis hin zum Außenanschluß A₄.

Für den unteren Bereich des Bauelements, also für die Abschirmschicht 41 und die Elektrodenschicht 31, ergibt sich ein ähnliches Bild, so daß auch dort zwei Kapazitäten 13, 14 gebildet sind.

Diese Ausführungsform des Bauelements hat den Vorteil, daß mit drei Elektrodenschichten vier Kondensatoren zur Verfügung gestellt werden können.

Wie Figur 7C zu entnehmen ist, sind diese vier Kondensatoren hinsichtlich ihrer Kapazität aber nicht unabhängig, das heißt, daß bei Variationen von C₁ automatisch auch C₂ geändert wird. C₁ und C₂ sind gleich. Dementsprechend sind auch C₃ und C₄ gleich, da sie ja auch durch gleiche Elektrodenschichten gebildet werden. Insgesamt resultiert eine Parallelschaltung von Reihenschaltungen von Kondensatoren, wobei die erste Reihenschaltung gebildet wird von den Kondensatoren 11, 13 und wobei die zweite Reihenschaltung gebildet wird durch die Kondensatoren 12 und 14. Die Reihenschaltungen wiederum sind parallel zueinander geschaltet. Die Außenanschlüsse A₂ und A₄ sind über die Abschirmschicht 41 miteinander verbunden und liegen deshalb auf demselben Potential.

Figur 7D zeigt eine Erweiterung des in Figur 7A gezeigten Bauelements. Das Bauelement gemäß Figur 7D ist als sogenannter Dreibein ausgeführt. Dies bedeutet, daß die Abschirmelektrode 41 von einer Seite, von der hinteren Seite des Bauelementes her mit drei Außenanschlüssen verbunden ist. Die Außenanschlüsse A₄ und A₃ entsprechen den in Figur 1 gezeigten Außenanschlüssen. Zusätzlich ist noch ein Außenanschluß A₆ gezeigt, der in Figur 1 gestrichelt angedeutet ist und der zwischen den Außenanschlüssen A₄ und A₃ angeordnet ist. Von der gegenüberliegenden Seite her ist die Abschirmschicht 41 durch den Außenanschluß A₅ zugänglich gemacht. In dem Ausführungsbeispiel gemäß Figur 7D wird also die Kontaktierungsmöglichkeit der drei in dem Bauelement enthaltenen Schichten erhöht.

Bezüglich des Ersatzschaltbildes gilt für das Beispiel in Figur 7D das in Figur 7C gezeigte Ersatzschaltbild.

Bezüglich der Außenanschlüsse, mit denen die Elektrodenschichten 21, 31 kontaktiert werden; besteht ein weiterer Unterschied zur Figur 7A. Dort werden die Elektrodenschichten 21, 31 von verschiedenen Seiten des Bauelements her kontaktiert. Gemäß Figur 7D werden die Elektrodenschichten 21, 31 von derselben Seite des Bauelements, nämlich mit den Außenanschlüssen A₁ und A₂ kontaktiert.

Figur 7E zeigt eine Erweiterung des Ausführungsbeispiels aus Figur 7D. Ähnlich zu dem Ausführungsbeispiel aus Figur 7D sind bei dem Beispiel gemäß Figur 7E zusätzliche Außenanschlüsse A₅ und A₆ vorgesehen. Diese Außenanschlüsse sind gezeigt in Figur 1 durch gestrichelte zusätzliche Außenanschlüsse A₅ und A₆.

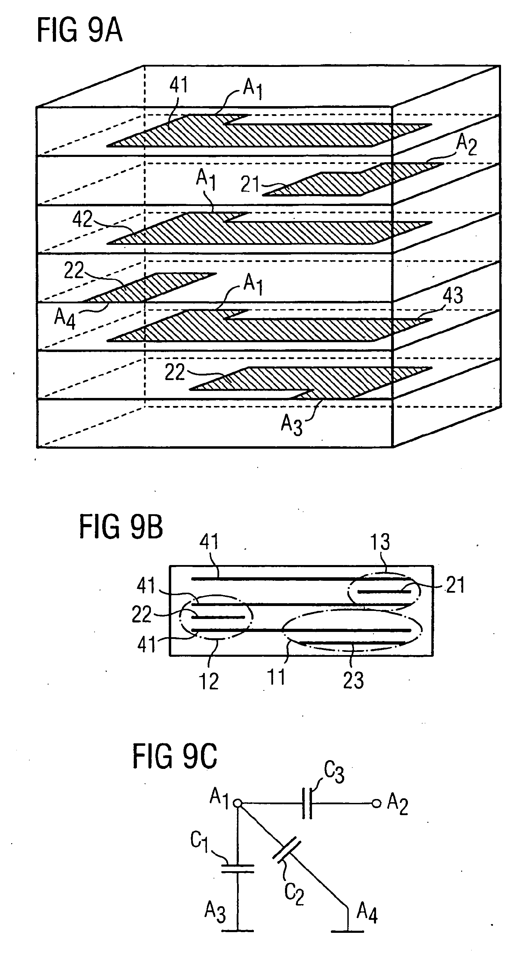

Zusätzlich zu dem Beispiel nach Figur 7E sind weitere Elektrodenschichten 22, 32 vorgesehen, die die Kapazität der Kondensatoren erhöhen können. Die Elektrodenschichten 21 und 22 sind dabei verbunden mit dem Außenanschluß A₄. Die Elektrodenschichten 31 und 32 sind verbunden mit dem Außenanschluß A₃. Darüber hinaus sind Abschirmschichten 41, 42, 43, 44, 45 vorgesehen, die auf der Rückseite des Bauelements jeweils mit drei Außenanschlüssen A₁, A₂ und A₅ kontaktiert sind. Auf der gegenüberliegenden Seite sind die Abschirmschichten 41, 42, 43, 44, 45 mit dem Außenanschluß A₆ kontaktiert. Zwischen jeweils zwei Elektrodenschichten 21, 22, 31, 32 ist eine Abschirmschicht 41, 42, 43, 44, 45 angeordnet zur Bildung eines Kondensators mit jeweils einer Elektrodenschicht. Zudem sind im Unterschied zur Figur 9A am oberen Ende und am unteren Ende des Schichtstapels jeweils eine Abschirmschicht 41, 45 vorgesehen, die die Symmetrie erhöhen und die Abschirmung des Bauelements nach außen verbessern.

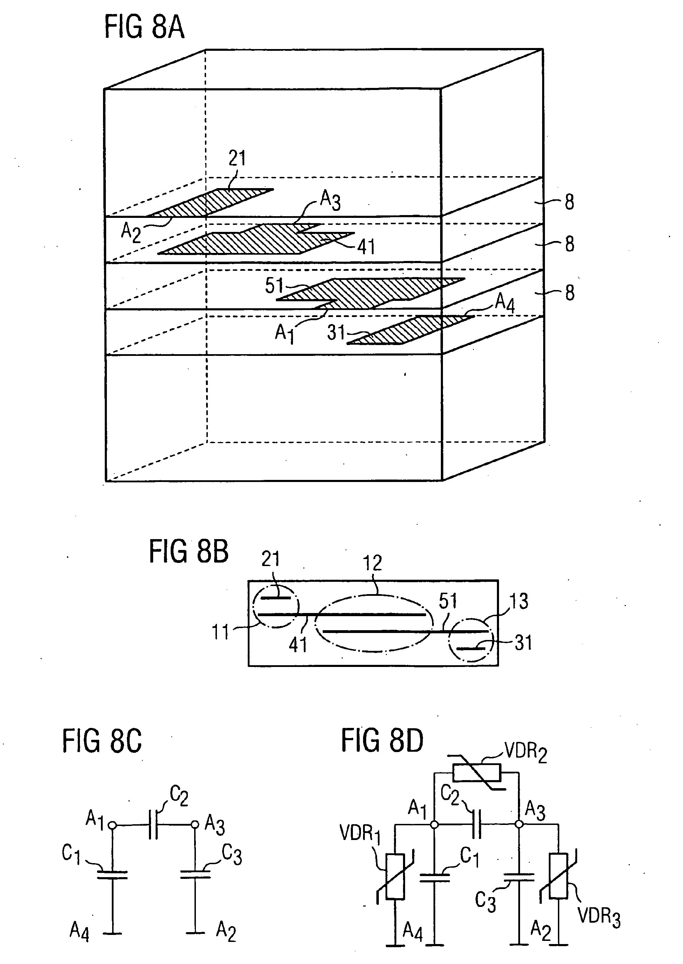

Figur 8A zeigt ein weiteres Bauelement in einer perspektivischen Darstellung, wobei zwei Abschirmschichten enthalten sind. Die beiden Abschirmschichten mit den Bezugszeichen 41 und 51 unterscheiden sich hinsichtlich der Formgebung insofern, als daß sie mit verschiedenen Außenanschlüssen kontaktiert sind. Die Abschirmschicht 41 ist mit dem Außenanschluß A₃ und die Abschirmschicht 51 mit dem Außenanschluß A₁ kontaktiert. Zusammen mit dem Überlapp, den die beiden Abschirmschichten 41, 51 miteinander aufweisen folgt daraus die Bildung eines weiteren Kondensators, der von außen über die Außenanschlüsse A₁ und A₃ beschaltet werden kann. Es sind ferner die Elektrodenschichten 21 und 31 vorgesehen, die mit dem Außenanschluß A₂ beziehungsweise A₄ kontaktiert sind. Wie auch in Zusammenschau mit Figur 8B zu entnehmen ist, bildet die Elektrodenschicht 21 mit der Abschirmschicht 41 einen ersten Kondensator 11. Darüber hinaus bildet die Elektrodenschicht 31 mit der Abschirmschicht 51 einen weitern Kondensator 13. Auch die beiden Abschirmschichten 41, 51 bilden zusammen einen weiteren Kondensator 12. Wie dem Ersatzschaltbild Figur 8C beziehungsweise Figur 8D zu entnehmen ist, ist dieser weitere Kondensator von außen beschaltbar. Durch Einführen der beiden Abschirmschichten 41, 51 kann also der Zweck erreicht werden, einerseits die beiden Elektrodenschichten 21 und 31 besonders wirkungsvoll, nämlich durch zwei übereinanderliegende Abschirmschichten voneinander zu entkoppeln. Darüber hinaus kann erreicht werden, daß die beiden Kondensatoren 11 und 13 eine definierte Kopplung erhalten, die durch die Kapazität des Kondensators 12 definiert ist. Eine solche definierte Kopplung ist in vielen Anwendungsfällen deutlich vorteilhafter als eine undefinierte Streukapazität zwischen zwei in einem Vielschichtbauelement angeordneten Kondensatoren. Beispielsweise kann der die definierte Kopplung repräsentierende Kondensator 12 bei einer Entstör-Schaltung als Rauschunterdrückung verwendet werden.

Der Figur 8B ist noch zu entnehmen, daß wie schon in Figuren 6B und 7B gezeigt, ein Überstand der Abschirmschichten 41, 51 über die jeweilige abzuschirmende Elektrodenschicht 21, 31 besonders vorteilhaft ist.

Figur 8C zeigt ein erstes Ersatzschaltbild für das Bauelement aus Figur 8A für den Fall, daß für die Dielektrikumschichten 8 ausschließlich Kondensatormaterialien verwendet werden. In diesem Fall besteht das Ersatzschaltbild aus drei Kondensatoren mit den Kapazitäten C₁,C₂ und C₃. Der durch die Kapazität C₂ repräsentierte Kondensator 12 ist durch die Außenanschlüsse A₁ und A₂ von außen zugänglich und kann so extern beschaltet werden.

Zu Figur 8C ist noch zu sagen, daß die drei Kapazitäten C₁, C₂, C₃ eine π-Schaltung bilden.

Eine andere Schaltbildvariante zeigt Figur 8D. Hier wird davon ausgegangen, daß zumindest die zwischen zwei Elektrodenschichten beziehungsweise zwischen einer Elektrodenschicht und einer Abschirmschicht beziehungsweise zwischen zwei Abschirmschichten liegenden Dielektrikumschichten 8 alle ein Varistormaterial enthalten. Daraus ergibt sich eine Parallelschaltung eines spannungsabhängigen Widerstandes VDR₁, VDR₂ und VDR₃ zu jeder Kapazität C₁, C₂, C₃. Zwei Elektrodenschichten mit einer dazwischenliegenden Varistorkeramik bilden also einerseits einen Kondensator aufgrund der Elektrodenschichten und des dazwischenliegenden Dielektrikums, sowie andererseits einen Varistor aufgrund des spannungsabhängigen Widerstands der dazwischenliegenden Keramikschicht. Die beiden Bauelemente sind parallel geschaltet, wie auch Figur 8D zu entnehmen ist. Ein solches mit Varistorkeramik ausgerüstetes Bauelement hat den Vorteil, daß es als EMI-Filter verwendet werden kann.

Allerdings ist es nicht zwingend, bei Einführung einer Varistorkeramik gleich alle Dielektrikumschichten mit einer solchen Varistorkeramik auszurüsten. Es kann durchaus auch vorteilhaft sein, nur die zwischen den Abschirmschichten 41, 51 liegende Dielektrikumschicht 8 als Varistorkeramik auszuführen. In diesem Fall würden die Varistoren VDR₁ und VDR₂ wegfallen und es verbliebe lediglich ein zur Kapazität C₂ parallel geschalteter VDR₂ im Schaltbild nach Figur 8D.

Genausogut können aber auch nur eine oder mehrere andere der Dielektrikumschichten 8 als Varistormaterial ausgeführt werden.

Figur 9A zeigt ein weiteres Ausführungsbeispiel für ein Vielschichtbauelement nach dem in Figur 6A vorgestellten Typ, wobei eine Erweiterung darin zu sehen ist, daß noch ein weiterer Kondensator in das Bauelement integriert ist. Dies wird erreicht, indem drei verschiedene Typen von Elektrodenschichten, nämlich Elektrodenschichten 21, 22 und 23 vorgesehen sind. Diese drei Elektrodenschichten 21, 22, 23 sind mit verschiedenen Außenanschlüssen, A₂ für Elektrodenschicht 21, A₄ für Elektrodenschicht 22 und A₃ für Elektrodenschicht 23, kontaktiert. Die drei Elektrodenschichten 21, 22, 23 sind, wie auch Figur 9B zu entnehmen ist, jeweils beteiligt an der Bildung eines Kondensators 11, 12, 13. Im einzelnen wird der Kondensator 13 gebildet von der Elektrodenschicht 21 und der darüberliegendew Abschirmschicht 41. Darüber hinaus ist an dem Kondensator 13 noch die darunterliegende Abschirmschicht 42 beteiligt. Die Abschirmschichten 41, 42, 43 weisen identische Form auf und sind daher demselben Typ von Abschirmschicht zuzuordnen. Sie sind alle mit dem Außenanschluß A₁ verbunden.

Der Kondensator 12 wird gebildet durch die Elektrodenschicht 22 sowie durch die Abschirmschicht 41 sowie durch die Abschirmschicht 43. Der Kondensator 11 wird gebildet durch die Elektrodenschicht 23 und durch die Abschirmschicht 43. Demnach ist die Abschirmschicht 43 und die Abschirmschicht 42 jeweils an zwei verschiedenen Kondensatoren beteiligt. Die Abschirmschicht 43 ist nur am Kondensator 13 beteiligt.

Im Vergleich mit Figur 6A kann so gezeigt werden, daß durch Hinzunahme weiterer Elektrodenschichten beziehungsweise Abschirmschichten die Anzahl der Kondensatoren, die nach dem Prinzip von Figur 6A gebildet sind, erhöht werden kann.

Es ist noch darauf hinzuweisen, daß der Elektrodenschicht 21 als Gegenelektrode für die Bildung eines Kondensators sowohl die Abschirmschicht 42 als auch die oberste Abschirmschicht 41 zur Verfügung steht. Demnach wäre die oberste Abschirmschicht 41 zur Bildung eines Kondensators nicht unbedingt erforderlich. Sie hat jedoch den Vorteil, daß einerseits die Kapazität des Kondensators 13 durch sie erhöht werden kann, da noch einmal dieselbe Kapazität dazu kommt, wie die zwischen der Elektrodenschicht 21 und der Abschirmschicht 42 gebildeten Kapazität. Darüber hinaus hat die Abschirmschicht 41 noch den Vorteil, daß die Elektrodenschicht 21 nach außen hin abgeschirmt wird.

Figur 9C zeigt ein Ersatzschaltbild für das Bauelement aus Figur 9A, wo eine Sternschaltung von drei Kapazitäten C₁, C₂, C₃ zu erkennen ist, wobei der Außenanschluß A₁ den Sternpunkt bildet.

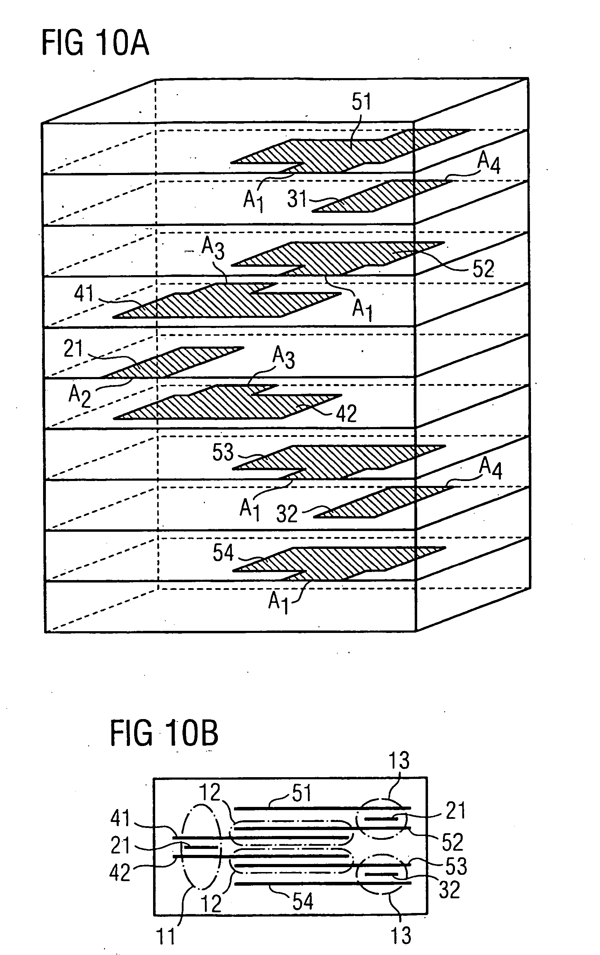

Figur 10A zeigt beispielhaft, wie ein Bauelement gebildet nach dem Grundprinzip von Figur 8A durch Hinzunahme weiterer Schichten erweitert werden kann. Es sind nun neben den Elektrodenschichten 21 und 31 noch eine weitere Elektrodenschicht 32 vorgesehen. Durch diese zusätzliche Elektrodenschicht 32, die vom selben Typ wie die Elektrodenschicht 31 ist, das heißt, daß sie die gleiche Form aufweist und daß sie auch dieselbe horizontale Position aufweist und daß sie auch mit dem selben Außenanschluß, hier A₄, verbunden ist. Durch die Hinzunahme einer weiteren Elektrodenschicht 32 kann die Kapazität eines der im Bauelement gebildeten Kondensatoren erhöht werden. Durch entsprechende Fortsetzung des in Figur 8A dargestellten Prinzip der jeweils doppelten Abschirmschichten 41, 51 wird dementsprechend bei der Ausführung gemäß Figur 10A noch eine weitere Abschirmschicht 52 vorgesehen, um für eine gute Abschirmung zwischen den Elektrodenschichten 31 und 21 zu sorgen. Darüber hinaus bilden natürlich die Abschirmschichten 41 und 52 wieder einen Beitrag zu dem Kondensator, der zwischen den Außenanschlüssen A₁ und A₃, vergleiche auch hierzu Figur 8C, wo der Kondensator mit der Kapazität C₂ bezeichnet ist, beitragen.

Die Abschirmschichten 51 und 52 sowie 53 und 54 in Figur 10A sind alle vom selben Typ. Ebenso sind die Abschirmschichten 41 und 42 in Figur 10A von demselben Typ. Für die weitere Hinzunahme einer Elektrodenschicht 31 hätte die Hinzunahme der Abschirmschicht 52 genügt, so daß die Abschirmschichten 51 und 54 für diesen Zweck nicht unbedingt notwendig sind. Sie können in Figur 10A demnach auch weggelassen werden.

Wie schon zu Figur 9A erklärt, kann jedoch eine Abschirmschicht als oberste Schicht im Bauelement den Vorteil haben, daß die oberste Elektrodenschicht 31 nicht nur gegenüber der Elektrodenschicht 21 sondern auch nach außen hin gut abgeschirmt ist. Darüber hinaus kann die Abschirmschicht 51 auch zur Kapazität des mit der Elektrodenschicht 31 gebildeten Kondensators, vergleiche in Figur 8C die Kapazität C₁, beitragen.

Bei Hinzunahme einer weiteren Abschirmschicht 51 ist es noch aus einem anderen Grund als der Abschirmung nach außen und der zusätzlichen Kapazität sinnvoll, eine entsprechende auf der Unterseite angepaßte Abschirmschicht 54 vorzusehen. In dem Beispiel nach Figur 10A, was auch in Zusammenschau mit Figur 10B sehr gut zu erkennen ist, kann nämlich erreicht werden, daß das Bauelement bezüglich der Ebene, in der die Elektrodenschicht 21 liegt, spiegelsymmetrisch ausgestaltet ist. Dadurch gelingt es, die innere Symmetrie des Bauelements zu erhöhen.

Unter Bezugnahme auf Figur 10B wird noch darauf hingewiesen, daß der Kondensator 11 gebildet wird unter Beteiligung der Elektrodenschicht 21 sowie der Abschirmschichten 41 und 42, daß der Kondensator 12 gebildet wird unter Beteiligung der Abschirmschichten 53 und 42 sowie der Abschirmschichten 41 und 52 und daß der Kondensator 13 gebildet wird aus den Elektrodenschichten 32 sowie den Abschirmschichten 53 und 54 und der Elektrodenschicht 31 sowie den Abschirmschichten 52 und 51. Im übrigen gilt für das Bauelement nach Figur 10A das Ersatzschaltbild nach Figur 8C.

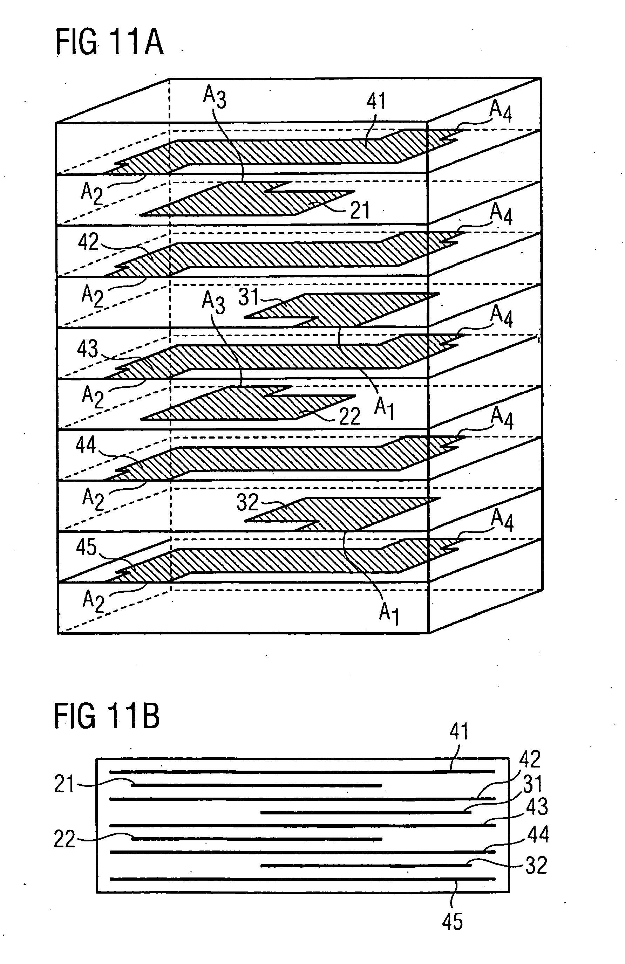

Figur 11A zeigt beispielhaft, wie das Grundprinzip nach Figur 7A durch Hinzunahme weiterer Schichten erweitert werden kann. Gemäß Figur 11A sind als Abschirmschichten die Abschirmschichten 41, 42, 43, 44 und 45 vorgesehen. Alle diese Abschirmschichten sind von demselben Typ, das heißt, daß sie alle mit den Außenanschlüssen A₂ und A₄ verbunden sind und im übrigen dieselbe Form und dieselbe horizontale Positionierung aufweisen, das heißt, daß sie senkrecht zur Stapelrichtung betrachtet denkungsgleich sind.

Die äußeren Abschirmschichten 41 und 45 dienen dabei der Abschirmung des Bauelements nach außen. Durch die Hinzunahme weiterer Elektroden- und Abschirmschichten, wobei hier zusätzlich zur Elektrodenschicht 21 noch die Elektrodenschicht 22 von demselben Typ dazu kommt und wobei hinsichtlich der Elektrodenschicht 31 noch die Elektrodenschicht 32 von demselben Typ dazu kommt, kann die Kapazität jedes hier gebildeten Kondensators erhöht werden.

Das in Figur 1 gezeigte Bauelement hat vorzugsweise eine Grundfläche kleiner als 2,5 mm². Besonders vorteilhaft ist eine Grundfläche von 1,37 mm², was der Bauform 0405 entspricht und was den Vorteil hat, daß eine besonders kleine Bauelementfläche für die beiden Kondensatoren benötigt wird.

In einer anderen Ausführungsform eines Bauelements können die hier beschriebenen Elemente auch verdoppelt nebeneinander in einem einzigen Bauelement vorliegen, was die Anzahl von Kondensatoren erhöht und was beispielsweise in der Bauform 0508 realisiert werden kann.

Figur 8D zeigt noch den Vorteil bei der Integration von Varistormaterialien in die Dielektrikumschichten, was daraus ersichtlich ist, daß die Varistoren VDR₁, VDR₂ und VDR₃ bereits in das Vielschichtbauelement integriert sind, wodurch auf separate Varistoren bei entsprechender Schaltung nach dem Stand der Technik verzichtet werden kann.

Die hier beschriebene Erfindung ist nicht auf die dargestellten und beschriebenen Ausführungsbeispiele beschränkt. Sie umfaßt ferner auch alle fachmännischen Abwandlungen sowie Teil- und Unterkombinationen der beschriebenen und/oder dargestellten Merkmale und Maßnahmen.

Insbesondere ist die Erfindung nicht hinsichtlich der Anzahl der Elektrodenschichten beschränkt. Es wurde gezeigt, daß hier vorgestellten Konzepte beliebig in der Zahl der Elektrodenschichten erweitert werden können.

### Bezugszeichenliste

- 11, 12, 13, 14: Kondensator
- 21, 22, 23, 24: Elektrodenschicht
- 31, 32: Elektrodenschicht
- 41, 42, 43, 44, 45: Abschirmschicht
- 51, 52, 53, 54: Abschirmschicht
- VDR₁, VDR₂, VDR₃: Varistoren
- 6: Grundkörper
- A₁, A₂, A₃, A₄, A₅, A₆: Außenanschlüsse
- 7: Längsachse
- 8: Dielektrikumschicht
- 9: Überstand
- 10: Überlapp

## Patentansprüche

1. Elektrisches Vielschichtbauelement
- enthaltend mindestens zwei Kondensatoren (11, 12, 13, 14), die jeweils gebildet sind aus gegenüberliegenden Elektrodenschichten (21, 41, 51) mit wenigstens einer dazwischenliegenden Dielektrikumschicht (8),
- bei dem zwischen zwei seitlich zueinander versetzten Elektrodenschichten (21, 22, 31, 32) wenigstens eine Abschirmschicht (41, 51) angeordnet ist,
- das eine Mehrzahl an Elektrodenschichten (21, 22) einer ersten Sorte enthält, die nur zu einem ersten Kondensator (11) beitragen,
- das eine Mehrzahl an Elektrodenschichten (31, 32) einer zweiten Sorte enthält, die nur zu einem zweiten Kondensator (12) beitragen,
- bei dem die beiden Sorten von Elektrodenschichten (21, 22, 31, 32) jeweils in übereinander gestapelter Form vorliegen,
- bei dem die Stapel seitlich zueinander versetzt sind,
- bei dem zwischen jeder Elektrodenschicht (21, 22) der ersten und jeder Elektrodenschicht (31, 32) der zweiten Sorte wenigstens eine Abschirmschicht (41, 51) angeordnet ist, **dadurch gekennzeichnet, dass**
- die Elektrodenschichten (21, 22) der ersten Sorte und die Elektrodenschichten (31, 32) der zweiten Sorte überlappen.

2. Bauelement nach Anspruch 1,
bei dem jede der beiden seitlich zueinander versetzten Elektrodenschichten (21, 22, 31, 32) von einer Abschirmschicht (41, 42, 43, 44, 45, 51, 52, 53, 54) wenigstens teilweise überlappt wird.

3. Bauelement nach einem der Ansprüche 1 oder 2,
bei dem zwei Abschirmschichten (41, 42, 43, 44, 45, 51, 52, 53, 54) vorgesehen sind, die untereinander einen Überlapp (10) aufweisen.

4. Bauelement nach Anspruch 2,
bei dem eine Abschirmschicht (41) vorgesehen ist, die die beiden Elektrodenschichten (21, 31) überlappt.

5. Bauelement nach einem der Ansprüche 1 bis 4,
bei dem jede Abschirmschicht (41, 51) Teil eines oder mehrerer Kondensatoren (11, 12, 13, 14) ist.

6. Bauelement nach einem der Ansprüche 1 bis 5,
bei dem jede Abschirmschicht (41, 51) zu jedem der beiden Kondensatoren (11, 12) beiträgt.

7. Bauelement nach einem der Ansprüche 2 bis 6,
bei dem die jeweils unterste Elektrodenschicht (21, 22, 31, 32) und die jeweils oberste Elektrodenschicht (21, 22, 31, 32) des Bauelements jeweils auf der Ober- und auf der Unterseite mit einer Abschirmschicht (51, 41) versehen ist.

8. Bauelement nach einem der Ansprüche 1 bis 7,
bei dem zwei Kondensatoren (11, 12) dieselbe Kapazität (C₁, C₂) haben.

9. Bauelement nach einem der Ansprüche 1 bis 7,
bei dem zwei Kondensatoren (11, 12) verschiedene Kapazitäten (C₁, C₂) haben.

10. Bauelement nach einem der Ansprüche 1 bis 9,
bei dem die Elektrodenschichten (21, 22, 31, 32) Silber, Palladium, Platin, eine Legierung aus Silber und Palladium, eine Legierung aus Silber und Platin, Kupfer oder Nickel enthalten.

11. Bauelement nach einem der Ansprüche 1 bis 10,
bei dem die Dielektrikumschichten (8) ein Material mit einem spannungsabhängigen Widerstand enthalten.

12. Bauelement nach einem der Ansprüche 1 bis 10,
bei dem die Dielektrikumschichten (8) ein Kondensatormaterial enthalten.

## Claims

1. Electrical multilayer component
- containing at least two capacitors (11, 12, 13, 14) each formed from opposite electrode layers (21, 41, 51) with at least one dielectric layer (8) situated therebetween,
- in which at least one shielding layer (41, 51) is arranged between two electrode layers (21, 22, 31, 32) laterally offset with respect to one another,
- which contains a plurality of electrode layers (21, 22) of a first type, which contribute only to a first capacitor (11),
- which contains a plurality of electrode layers (31, 32) of a second type, which contribute only to a second capacitor (12),
- in which the two types of electrode layers (21, 22, 31, 32) are present in each case in a form stacked one above another,
- in which the stacks are laterally offset with respect to one another,
- in which at least one shielding layer (41, 51) is arranged between each electrode layer (21, 22) of the first type and each electrode layer (31, 32) of the second type, **characterized in that**
- the electrode layers (21, 22) of the first type and the electrode layers (31, 32) of the second type overlap.

2. Component according to Claim 1,
in which each of the two electrode layers (21, 22, 31, 32) laterally offset with respect to one another is at least partly overlapped by a shielding layer (41, 42, 43, 44, 45, 51, 52, 53, 54).

3. Component according to either of Claims 1 and 2,
in which two shielding layers (41, 42, 43, 44, 45, 51, 52, 53, 54) are provided, which have an overlap (10) in relation to each other.

4. Component according to Claim 2,
in which one shielding layer (41) is provided which overlaps the two electrode layers (21, 31).

5. Component according to any of Claims 1 to 4,
in which each shielding layer (41, 51) is part of one or a plurality of capacitors (11, 12).

6. Component according to any of Claims 1 to 5,
wherein each shielding layer (41, 51) contributes to each of the two capacitors (11, 12, 13, 14).

7. Component according to any of Claims 2 to 6,
in which the respective bottommost electrode layer (21, 22, 31, 32) and the respective topmost electrode layer (21, 22, 31, 32) of the component are provided with a shielding layer (51, 41) in each case on the top side and on the underside.

8. Component according to any of Claims 1 to 7,
in which two capacitors (11, 12) have the same capacitance (C₁, C₂).

9. Component according to any of Claims 1 to 7,
in which two capacitors (11, 12) have different capacitances (C₁, C₂).

10. Component according to any of Claims 1 to 9,
in which the electrode layers (21, 22, 31, 32) contain silver, palladium, platinum, an alloy of silver and palladium, an alloy of silver and platinum, copper or nickel.

11. Component according to any of Claims 1 to 10,
in which the dielectric layers (8) contain a material having a voltage-dependent resistance.

12. Component according to any of Claims 1 to 10,
in which the dielectric layers (8) contain a capacitor material.

## Revendications

1. Composant multicouche électrique
- contenant au moins deux condensateurs (11, 12, 13, 14) qui sont respectivement formés de couches d'électrode (21, 41, 51) opposées avec au moins une couche de diélectrique (8) interposée entre elles,
- dans lequel au moins une couche de blindage (41, 51) est disposée entre deux couches d'électrode (21, 22, 31, 32) décalées latéralement l'une par rapport à l'autre,
- lequel contient une pluralité de couches d'électrode (21, 22) d'une première sorte qui contribuent à un seul premier condensateur (11),
- lequel contient une pluralité de couches d'électrode (31, 32) d'une deuxième sorte qui contribuent à un seul deuxième condensateur (12),
- dans lequel les deux sortes de couches d'électrode (21, 22, 31, 32) sont présentes à chaque fois en forme d'empilage les unes au-dessus des autres,
- dans lequel les piles sont décalées latéralement les unes par rapport aux autres,
- dans lequel au moins une couche de blindage (41, 51) est disposée entre chaque couche d'électrode (21, 22) de la première sorte et chaque couche d'électrode (31, 32) de la deuxième sorte,
**caractérisé en ce que**
- les couches d'électrode (21, 22) de la première sorte et les couches d'électrode (31, 32) de la deuxième sorte se chevauchent.

2. Composant selon la revendication 1, dans lequel chacune des deux couches d'électrode (21, 22, 31, 32) décalées latéralement l'une par rapport à l'autre est au moins partiellement recouverte par une couche de blindage (41, 42, 43, 44, 45, 51, 52, 53, 54).

3. Composant selon l'une des revendications 1 ou 2, dans lequel sont prévues deux couches de blindage (41, 42, 43, 44, 45, 51, 52, 53, 54), lesquelles présentent un chevauchement (10) entre elles.

4. Composant selon la revendication 2, dans lequel est prévue une couche de blindage (41) qui chevauche les deux couches d'électrode (21, 31).

5. Composant selon l'une des revendications 1 à 4, dans lequel chaque couche de blindage (41, 51) fait partie d'un ou plusieurs condensateurs (11, 12, 13, 14).

6. Composant selon l'une des revendications 1 à 5, dans lequel chaque couche de blindage (41, 51) contribue à chacun des deux condensateurs (11, 12).

7. Composant selon l'une des revendications 2 à 6, dans lequel la couche d'électrode (21, 22, 31, 32) respectivement la plus basse et la couche d'électrode (21, 22, 31, 32) respectivement la plus haute du composant est à chaque fois munie d'une couche de blindage (51, 41) sur le côté supérieur et sur le côté inférieur.

8. Composant selon l'une des revendications 1 à 7, dans lequel deux condensateurs (11, 12) possèdent la même capacité (C₁, C₂).

9. Composant selon l'une des revendications 1 à 7, dans lequel deux condensateurs (11, 12) possèdent des capacités (C₁, C₂) différentes.

10. Composant selon l'une des revendications 1 à 9, dans lequel les couches d'électrode (21, 22, 31, 32) contiennent de l'argent, du palladium, du platine, un alliage d'argent et de palladium, un alliage d'argent et de platine, du cuivre ou du nickel.

11. Composant selon l'une des revendications 1 à 10, dans lequel les couches de diélectrique (8) contiennent un matériau ayant une résistance dépendante de la tension.

12. Composant selon l'une des revendications 1 à 10, dans lequel les couches de diélectrique (8) contiennent un matériau de condensateur.
